# EUROPÄISCHE PATENTSCHRIFT

(11) **EP 2 097 912 B1**
(45) Veröffentlichungstag und Bekanntmachung des Hinweises auf die Patenterteilung: **25.05.2011**
(21) Anmeldenummer: 07764850.9
(22) Anmeldetag: 26.06.2007
(51) Int. Cl.: H01F 38/08

(54) **VERFAHREN UND VORRICHTUNG ZUM BETRIEBEN EINES TRANSFORMATORS**
METHOD AND APPARATUS FOR OPERATING A TRANSFORMER
PROCÉDÉ ET DISPOSITIF POUR FAIRE FONCTIONNER UN TRANSFORMATEUR

(30) Priorität: 27.09.2006 DE 102006045970
(43) Veröffentlichungstag der Anmeldung: 09.09.2009
(73) Patentinhaber: Robert Bosch GmbH, 70442 Stuttgart (DE)
(72) Erfinder: KLOPCIC, Beno, 1231 Ljubliana-Crnuce (SI); MUELLER, Heinz-Ullrich, 64720 Michelstadt (DE); DOLINAR, Drago, 2000 Maribor (SI); STUMBERGER, Gorazd, 2288 Hajdina (SI)
(74) Vertreter: Thürer, Andreas
(86) Internationale Anmeldenummer: PCT/EP2007/005624
(87) Internationale Veröffentlichungsnummer: WO 2008/037304

(56) Entgegenhaltungen:
- CH-A- 382 322
- GB-A- 384 914
- GB-A- 1 127 115
- US-A- 3 317 811
- US-A- 3 688 181
- US-A- 4 418 267
- US-A- 4 897 773
- US-A1- 2005 276 085
- US-B1- 6 414 267
- KARAVAEV V T: "A TRANSFORMER FOR ARC WELDING AND CUTTING WITH COMPENSATION OF MAGNETIC LEAKAGE FLUXES" WELDING INTERNATIONAL, WOODHEAD PUBLISHING LIMITED, CAMBRIDGESHIRE, GB, Bd. 15, Nr. 9, 2001, Seiten 716-718, XP001101912 ISSN: 0950-7116

## Beschreibung

Die vorliegende Erfindung betrifft ein Verfahren sowie eine Vorrichtung zum Betreiben eines Transformators, insbesondere eines (Einphasen-)Mittelfrequenz-Schweißtransformators, mit einem Transformatorkern mit einer Primärwicklung und einer Sekundärwicklung. Die vorliegende Erfindung betrifft weiterhin ein entsprechendes Computerprogramm sowie ein entsprechendes Computerprogrammprodukt.

### Stand der Technik

Obwohl im folgenden im wesentlichen auf Mittelfrequenz-Schweißtransformatoren Bezug genommen wird, ist die vorliegende Erfindung nicht darauf beschränkt.

Mittelfrequenz-Transformatoren werden seit einer gewissen Zeit bei Schweißverfahren eingesetzt. Sie werden üblicherweise von einem Inverter mit einer rechteckigen Wechselspannung im Bereich einiger weniger kHz sowie einigen Hundert Volt gespeist. Der Transformator gibt an seiner Sekundärwicklung eine niedrige Spannung mit hohem Strom aus, die anschließend gleichgerichtet und für den Schweißvorgang verwendet wird. Die hohe Frequenz, mit der Mittelfrequenz-Transformatoren betrieben werden, ermöglicht eine effektive Energieumwandlung und damit das Verwenden eines relativ kleinen und leichten Transformators. Beim Betrieb treten allerdings Hysterese- bzw. Sättigungseffekte sowie Stromspitzen auf, die zum einen den Energietransfer beeinflussen und zum anderen bauteilschädigend wirken können. Derartige Schweißtransformatoren sind z. B. dem Anwenderhandbuch "Rexroth PSG 6xxx, MF-Schweißtransformatoren" der Rexroth Bosch Group, Ausgabe 03, Seiten 2-2 und 2-3 zu entnehmen.

Schweißtransformatoren sind beispielweise auch in der US6,414,267 B1 und der US 2005/0276085 A1 beschrieben.

Es ist bekannt, Stromspitzen teilweise durch ein paarweises Zusammenschalten von Dioden zu vermindern. Dafür müssen speziell ausgewählte Dioden verwendet werden, was zu erhöhten Herstellungs- und Reparaturkosten führt.

In der US 4,897,773 wird eine Transformatoranordnung mit Freilaufdioden beschrieben.

Es ist ebenfalls bekannt, Sättigungseffekte durch spezielle Programmierung der Transformatorsteuerungen bzw. einer Vorrichtung zum Betreiben eines Transformators zu vermindern. Nachteilig an dieser Lösung ist, dass eine derartige Programmierung immer nur für einen bestimmten Transformatortyp verwendet werden kann und daher ein erhöhter Programmierungsaufwand notwendig ist, wenn verschiedene Typen von Transformatoren verbessert werden sollen.

In der US 2005/0276085 A1 wird ein Verfahren zum Regeln eines Laststroms beschrieben, so dass der mittlere Laststrom sich schnell dem erwünschten Strom nähert, ohne die Übergangsantwort zu beeinflussen.

Es stellt sich daher die Aufgabe, ein Verfahren sowie eine Vorrichtung zum Betreiben eines Transformators anzugeben, die die genannten Nachteile nicht aufweisen, also insbesondere die Anstiegszeit des Eingangsstroms verkürzen und eine magnetische Sättigung im Transformatorkern sowie Stromspitzen im Ausgangsstrom vermindern.

Diese Aufgabe wird gelöst durch ein Verfahren sowie eine Vorrichtung zum Betreiben eines Transformators mit den Merkmalen der unabhängigen Patentansprüche. Vorteilhafte Ausgestaltungen sind Gegenstand der Unteransprüche und der nachfolgenden Beschreibung.

### Vorteile der Erfindung

Die im folgenden aufgeführten Merkmale und Vorteile beziehen sich sowohl auf das erfindungsgemäße Verfahren als auch auf die erfindungsgemäße Vorrichtung, soweit es nicht ausdrücklich anders beschrieben ist.

Das erfindungsgemäße Verfahren zum Betreiben eines Transformators, insbesondere eines (Einphasen-) Mittelfrequenz-Schweißtransformators, der einen Transformatorkern mit einer Primärwicklung und einer Sekundärwicklung, die in einen Sekundärkreis geschaltet ist, aufweist, umfasst das Regeln einer magnetischen Flussdichte im Transformatorkern zwischen einem oberen Flussdichteschwellwert und einem unteren Flussdichteschwellwert sowie das Regeln eines Laststroms in dem Sekundärkreis zwischen einem oberen Laststromschwellwert und einem unteren Laststromschwellwert. Bei der Regelung wird zweckmäßigerweise der Flussdichte- bzw. Laststrom-Istwert als Regelgröße erfasst und an den jeweiligen Sollwert als Führungsgröße angeglichen. Insbesondere werden die beschriebenen Vorgänge in der Regel so lange wiederholt, wie der Transformator, beispielsweise bei einem Schweißvorgang, betrieben wird. Mit der erfindungsgemäßen Lösung kann die Leistungsfähigkeit eines Transformators signifikant verbessert werden. Insbesondere werden Sättigungseffekte und Stromspitzen vermieden und die Anstiegszeit des Laststroms verkürzt. Diese Lösung ist auf einfach Weise in bestehenden Systemen implementierbar. Neu zu entwickelnde Transformatoren können aufgrund der verbesserten Leistungsfähigkeit verkleinert werden, wodurch weniger Gewicht und Kosten entstehen.

Vorteilhafterweise erfolgt das Regeln der magnetischen Flussdichte im Transformatorkern zwischen dem oberen Flussdichteschwellwert und dem unteren Flussdichteschwellwert durch abwechselndes Anlegen einer ersten Spannung und einer zweiten Spannung an die Primärwicklung des Transformators. Damit ist auf besonders einfache Weise die Regelung der magnetischen Flussdichte im Transformatorkern möglich. Insbesondere bei Mittelfrequenz-Transformatoren verhält sich die magnetische Flussdichte in weiten Teilen proportional zum Zeitverlauf der angelegten Rechteckspannung mit entsprechender Polarität. Beispielsweise kann durch Anlegen einer positiven Gleichspannung die magnetische Flussdichte erhöht und durch Anlagen einer negativen Gleichspannung vermindert werden.

Es ist ebenso zweckmäßig, wenn das Regeln des Laststroms im Sekundärkreis zwischen dem oberen Laststromschwellwert und dem unteren Laststromschwellwert durch abwechselndes Anlegen einer dritten Spannung und einer vierten Spannung an die Primärwicklung des Transformators erfolgt. Insbesondere bei Mittelfrequenz-Transformatoren mit einem nachgeschalteten Gleichrichter verhält sich der gleichgerichtete Laststrom im Sekundärkreis derart, dass ein Anstieg des Laststroms erfolgt, solange eine Spannung am Transformator anliegt, wohingegen der gleichgerichtete Laststrom absinkt, wenn keine Spannung am Transformator anliegt. Auf diese Weise ist durch einfaches Schalten von nur zwei Spannungen eine einfache Regelung des Laststroms möglich. Vorteilhafterweise sind die erste und die zweite Spannung Gleichspannungen mit im wesentlichen gleichem Betrag und umgekehrter Polarität, ist die dritte Spannung im wesentlichen Null und ist die vierte Spannung die erste oder die zweite Spannung. Auf diese Weise kann das Verfahren besonders einfach insbesondere zum Betreiben von Mittelfrequenz-Transformatoren verwendet werden, da im wesentlichen nur drei Spannungen bzw. eine Spannung mit positiver und negativer Polarität sowie keine Spannung angelegt werden, was durch das Vorsehen einfach ausgestalteter Schaltmittel möglich ist.

Die erfindungsgemäße Vorrichtung weist insbesondere Mittel zum Durchführen eines erfindungsgemäßen Verfahrens auf. Die erfindungsgemäße Vorrichtung zum Betreiben eines Transformators, insbesondere eines (Einphasen-)Mittelfrequenz-Schweißtransformators, mit einem Transformatorkern mit einer Primärwicklung und einer Sekundärwicklung, die in einen Sekundärkreis geschaltet ist, weist eine erste Bestimmungseinrichtung für eine magnetische Flussdichte im Transformatorkern, eine zweite Bestimmungseinrichtung für einen Laststrom im Sekundärkreis, eine erste Vergleichseinrichtung zum Vergleichen der bestimmten magnetischen Flussdichte mit wenigstens einem Flussdichteschwellwert und eine zweite Vergleichseinrichtung zum Vergleichen des bestimmten Laststroms mit wenigstens einem Laststromschwellwert auf. Die erfindungsgemäße Vorrichtung weist weiterhin eine Steuereinrichtung zum Ansteuern von Schaltmitteln auf Grundlage der Vergleiche auf, wobei die Schaltmittel erste Anschlüsse für eine Spannungsquelle und zweite Anschlüsse für die Primärwicklung des Transformators aufweisen und zum Anlegen einer ersten, zweiten, dritten oder vierten Spannung an die Primärwicklung des Transformators ausgebildet sind. Unter Bestimmungseinrichtung ist insbesondere eine Messeinrichtung, bspw. ein Sensor und ein Messgerät, zu verstehen. Ebenso kann auch eine Recheneinheit als Bestimmungseinrichtung vorgesehen sein, die bspw. die magnetische Flussdichte und/oder den Laststrom aus dem Zeitverlauf der angelegten Spannung sowie weiteren Parametern berechnet oder abschätzt. Eine derartige Vorrichtung ist besonders einfach herzustellen und erweist sich aufgrund der vergleichsweise geringen Bauteilanzahl in der Praxis als besonders robust und zuverlässig. Im übrigen wird auf die im Zusammenhang mit dem erfindungsgemäßen Verfahren genannten Vorteile verwiesen.

Vorteilhafterweise weist die Vorrichtung die Schaltmittel und/oder die Spannungsquelle auf.

Es ist zweckmäßig, wenn die erste und die zweite Spannung Gleichspannungen mit im wesentlichen gleichem Betrag und umgekehrter Polarität sind, die dritte Spannung im wesentlichen Null ist und die vierte Spannung die erste oder die zweite Spannung ist. Auch hier gelten wieder die bereits im Zusammenhang mit dem Verfahren genannten Vorteile. Insbesondere reicht es aus, eine Gleichspannungsquelle mit der Vorrichtung bzw. den.Schaltmitteln zu verbinden, um einen Transformator mit im wesentlichen drei Spannungen ("Plus", "Minus" und "Null") gemäß dem erfindungsgemäßen Verfahren zu betreiben.

Es ist von Vorteil, wenn die erfindungsgemäße Vorrichtung eine Gleichspannungsquelle zum Bereitstellen der ersten Gleichspannung, die mit den Schaltmitteln verbunden ist, aufweist. Eine derartige Vorrichtung kann üblicherweise als Schweißgerät ausgebildet sein, wobei die Gleichspannungsquelle beispielsweise als ein netzgespeister, gesteuerter Gleichrichter ausgebildet ist. Die Schaltmittel entsprechen in diesem Beispiel im wesentlichen einem gesteuerten Wechselrichter. Auf diese Weise kann ein Schweißgerät bereitgestellt werden, das alle Vorteile der erfindungsgemäßen Lösung aufweist.

Ein erfindungsgemäßes Computerprogramm enthält Programmcodemittel, um eines der erfindungsgemäßen Verfahren durchzuführen, wenn das Computerprogramm auf einem Computer oder einer entsprechenden Rechnereinheit, insbesondere einer der erfindungsgemäßen Rechnereinheiten, ausgeführt wird.

Ein erfindungsgemäßes Computer- bzw. Mikroprozessor-programmprodukt beinhaltet Programmcodemittel, die auf einem maschinen- bzw. computerlesbaren Datenträger gespeichert sind, um ein erfindungsgemäßes Verfahren durchzuführen, wenn das Programmprodukt auf einem Computer, einem Mikroprozessor oder auf einer entsprechenden Recheneinheit ausgeführt wird. Geeignete Datenträger sind insbesondere Disketten, Festplatten, ROM, Flash-Speicher, EEPROMs, CD-ROMs, u.a.m. Auch ein Download eines Programms über Computernetze (Internet, Intranet usw.) und Fahrzeugnetze (Body-Bus, Infotainment-Bus etc.) oder Luftschnittstellen (Mobilfunk) ist möglich.

Weitere Vorteile und Ausgestaltungen der Erfindung ergeben sich aus der Beschreibung und der beiliegenden Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im folgenden unter Bezugnahme auf die Zeichnung ausführlich beschrieben.

### Figurenbeschreibung

Figur 1 zeigt eine schematische Ansicht eines Mittelfrequenz-Schweißgeräts;
Figur 2 zeigt eine schematische Ansicht einer bevorzugten Ausführungsform der erfindungsgemäßen Vorrichtung; und
Figur 3 zeigt schematisch den Zusammenhang zwischen der an die Primärwicklung angelegten Spannung, der magnetischen Flussdichte im Transformatorkern und dem Laststrom im Sekundärkreis.

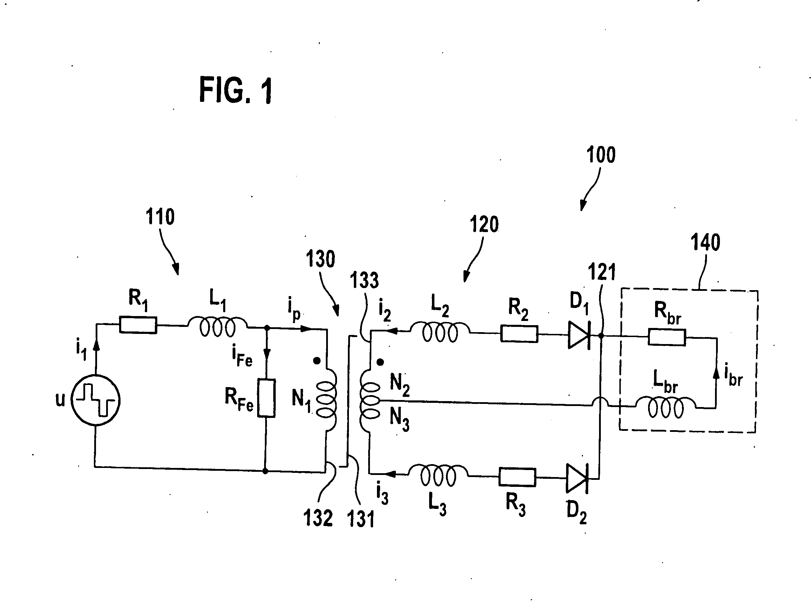

In Figur 1 ist eine Mittelfrequenz-Schweißanordnung schematisch dargestellt und insgesamt mit 100 bezeichnet. Die Anordnung 100 lässt sich in verschiedene Bestandteile unterteilen. Sie weist einen Primärkreis 110 und einen Sekundärkreis 120 auf, die über einen Transformator 130 verbunden sind. Eins Primärwicklung 132 des Transformators 130 mit einer Windungszahl N₁ ist in den Primärkreis 110, eine Sekundärwicklung 133 des Transformators 130 mit einer Windungszahl N₂ + N₃ ist in den Sekundärkreis 120 geschaltet. Der Transformator 130 weist weiterhin einen Transformatorkern 131 auf.

Im Sekundärkreis 120 ist ein Ausgangsbereich mit 140 bezeichnet, der eine Schweißlast repräsentiert. In Figur 1 sind verschiedene Widerstände, die mit R bezeichnet sind, Induktivitäten, die mit L bezeichnet sind, Dioden, die mit D bezeichnet sind, sowie Ströme, die mit i bezeichnet sind, dargestellt, wie es sich für einen Fachmann versteht. Im Primärkreis 110 ist weiterhin eine Spannungsquelle u vorgesehen, die den Primärkreis mit einer hochfrequenten Wechselspannung versorgt.

Der Sekundärkreis 120 ist teilweise als Gleichrichter ausgebildet, was zu einem gleichgerichteten Laststrom i_{br} zwischen einem Mittelabgriff der Sekundärwicklung 133 und einem Anschlusspunkt 121 führt.

Die Rechteckspannung am Eingang des Transformators verursacht einen dreieckförmigen Magnetisierungsstrom, der näherungsweise unabhängig vom Sekundärstrom ist. Der Magnetisierungsstrom ist in etwa proportional zum magnetischen Fluss bzw. zur magnetischen Flussdichte. Die magnetische Flussdichte im Transformatorkern wird durch die Eingangsspannung bestimmt.

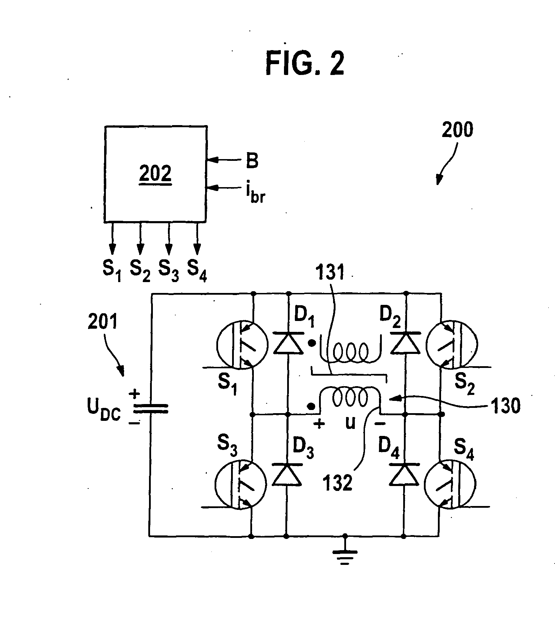

In Figur 2 ist eine bevorzugte Ausführungsform der erfindungsgemäßen Vorrichtung insgesamt mit 200 bezeichnet. Die Vorrichtung 200 weist eine als netzgespeisten Gleichrichter ausgebildete Gleichspannungsquelle 201 auf, die eine Gleichspannung U_{DC} zur Verfügung stellt. Die Vorrichtung 200 weist weiterhin als Transistoren S₁ bis S₄ ausgebildete Schaltmittel auf, die durch entsprechende Schaltung an der Primärwicklung 132 des Transformators 130 eine Spannung u mit Werten +U_{DC}, -U_{DC} und 0V bereitstellen können. Bei der gezeigten Ausführungsform werden die Transistoren bzw. Schalter S₁ und S₄ geschlossen, um eine Spannung +U_{DC} gemäß der angedeuteten Polarität von u anzulegen, und es werden die Schalter S₂ und S₃ geschlossen, um eine Spannung -U_{DC} anzulegen. Um eine Spannung 0V anzulegen, werden alle vier Schalter S₁ bis S₄ geöffnet. Um die Schalter nicht zu beschädigen, sollte darauf geachtet werden, die Schalter S₁ und S₃ sowie die Schalter S₂ und S₄ nicht gleichzeitig zu öffnen. Mit D₁ bis D₄ bezeichnete Dioden stellen einen Stromleitungspfad bereit, um Spannungsspitzen zu vermeiden, wenn alle Schalter S₁ bis S₄ geöffnet werden. Auf diesem Pfad kann die im Transformator vorhandene Energie in die Spannungsquelle abfließen. Sind beispielsweise die Schalter S₁ und S₄ geöffnet, fließt ein Strom durch die Primärwicklung 132. Wenn die Schalter geschlossen werden, kann ohne Vorhandensein entsprechender Dioden eine hohe Spannungsspitze entstehen, die die Transistoren beschädigen würde. Bei Vorhandensein der Dioden kann der Strom über die Dioden D₃ und D₂ abfließen.

Die Vorrichtung 200 weist eine als Mikroprozessor 202 ausgebildete Steuereinrichtung zum Ansteuern der Schalter S₁ bis S₄ auf. Der Mikroprozessor 202 weist dafür Ausgänge auf, die über nicht gezeigte Leitungen mit den Schaltern S₁ bis S₄ verbunden sind. Die Vorrichtung weist weiterhin eine nicht gezeigte erste Bestimmungseinrichtung für eine magnetische Flussdichte B auf, deren Wert ebenfalls dem Mikroprozessor 202 zugeführt wird. Weiterhin weist die Vorrichtung eine nicht gezeigte zweite Bestimmungseinrichtung für einen Laststrom i_{br} im Sekundärkreis des Transformators auf, dessen Wert ebenfalls dem Mikroprozessor 202 zugeführt wird. Wie erwähnt, können die Bestimmungseinrichtungen beispielsweise als Messeinrichtungen oder als Recheneinheiten ausgebildet sein.

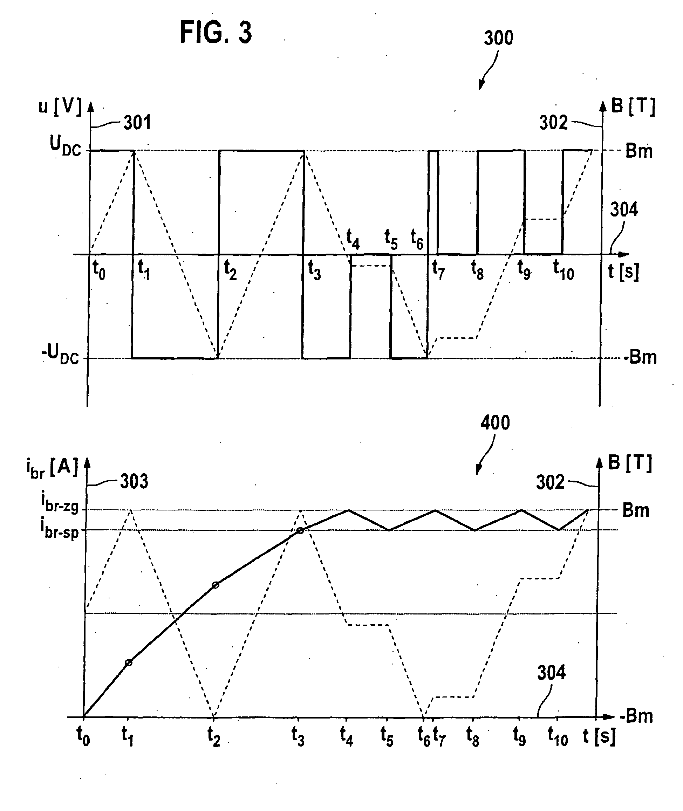

Der Mikroprozessor 202 weist weiterhin eine erste Vergleichseinrichtung zum Vergleichen der bestimmten magnetischen Flussdichte B mit zwei vorgebbaren Flussdichteschwellwerten Bm und -Bm (siehe Figur 3) sowie eine zweite Vergleichseinrichtung zum Vergleichen des bestimmten Laststroms i_{br} mit zwei vorgebbaren Laststromschwellwert i_{br-zg}, i_{br-sp} (siehe Figur 3) auf. Die vorgebbaren Schwellwerte der magnetischen Flussdichte Bm und -Bm sowie des Laststroms i_{br-zg} und i_{br-sp} sind in den Mikroprozessor 202 über herkömmliche Programmierungsverfahren eingebbar, wie es einem Fachmann bekannt ist. Bei typischen Punktschweißeinrichtungen bewegt sich Bm bei etwa 1, 5 T, i_{br-zg} bei ca. 13 kA und i_{br-sp} bei ca. 12 kA. Durch die Wahl der beiden Stromschwellwerte kann das Schwingverhalten des Laststroms beeinflusst werden.

Die Schalter S₁ bis S₄ werden zum Anlegen der Spannungen U_{DC}, -U_{DC} und 0V vom Mikroprozessor 202 auf Grundlage der Vergleiche derart gesteuert, wie es an einem Beispiel gemäß Figur 3 erläutert wird.

In Figur 3 sind ein erstes Diagramm 300 sowie ein zweites Diagramm 400 abgebildet, in denen die Spannung u an der Primärwicklung auf einer y-Achse 301, die magnetische Flußdichte B im Transformatorkern auf einer y-Achse 302 sowie der Lastrom i_{br} im Sekundärkreis auf einer y-Achse 303 jeweils gegen die Zeit t auf einer x-Achse 304 aufgetragen sind.

Der Betrieb des Transformators bzw. des Schweißgeräts beginnt zu einem Zeitpunkt t₀. Zu diesem Zeitpunkt wird die Spannung U_{DC} an die Primärwicklung des Transformators angelegt. In der Folge steigt die magnetische Flussdichte B im Transformatorkern im wesentlichen linear an, bis sie zu einem Zeitpunkt t₁ einen oberen Flussdichteschwellwert Bm erreicht. Gemäß der beschriebenen Ausführungsform der Erfindung werden die Schaltmittel von der Steuereinrichtung derart angesteuert, dass nun die Spannung -U_{DC} an der Primärwicklung des Transformators angelegt wird. Dieser Steuerungsvorgang wird im folgenden vereinfacht als "Spannung anliegen" beschrieben. Die magnetische Flussdichte im Transformatorkern sinkt im weiteren zeitlichen Verlauf wieder ab, bis sie schließlich zu einem Zeitpunkt t₂ den unteren Flussdichteschwellwert -Bm erreicht.

Nun wird wieder die Spannung U_{DC} angelegt, was ein Ansteigen der magnetischen Flussdichte zur Folge hat. Dieser Vorgang wiederholt sich bis zu einem Zeitpunkt t₄.

In Diagramm 400 ist der zeitliche Verlauf des Laststroms i_{br} dargestellt. Es ist erkennbar, dass der Laststrom i_{br} bis zum eben beschriebenen Zeitpunkt t₄ ansteigt. Zum Zeitpunkt t₄ erreicht der Laststrom i_{br} den oberen Laststromschwellwert i_{br-zg}. In der Folge wird keine Spannung mehr an die Primärwicklung angelegt, was ein Abfallen des Laststroms i_{br} und ein Konstantbleiben der magnetischen Flussdichte B nach sich zieht. Zu einem Zeitpunkt t₅ erreicht der abfallende Laststrom i_{br} den unteren Laststromschwellwert i_{br-sp}, woraufhin dieselbe Spannung angelegt wird, die vor dem Abschalten der Spannung angelegt war.

Im folgenden steigt der Laststrom i_{br} wieder an und die magnetische Flussdichte B nähert sich dem unteren Flussdichteschwellwert -Bm, den sie zu einem Zeitpunkt t₆ erreicht.

Wie erläutert, wird anschließend die Spannung U_{DC} angelegt, um die magnetische Flussdichte B wieder in Richtung des oberen Flussdichteschwellwerts Bm zu treiben.

Zu einem Zeitpunkt t₇ erreicht der Laststrom i_{br} wiederum den oberen Laststromschwellwert i_{br-zg}, was ein Abschalten der angelegten Spannung zur Folge hat, bis der Laststrom i_{br} zu einem Zeitpunkt t₈ wiederum den Schwellwert i_{br-sp} erreicht.

Anschließend wird wieder die vor dem Abschalten der Spannung zum Zeitpunkt t₇ angelegte Spannung U_{DC} angelegt, was wiederum ein Ansteigen des Laststroms i_{br} und der magnetischen Flussdichte B zur Folge hat.

Das beschriebene Verfahren wird nun so lange wiederholt, wie der Betrieb des Transformators bzw. des Schweißgeräts erwünscht ist.

Die vorliegende Erfindung ermöglicht auf einfache Weise durch alleiniges An-, Um- und Abschalten einer einzigen Gleichspannung einen Betrieb eines Transformators im wesentlichen ohne Sättigungseffekte und ohne Stromspitzen.

Es versteht sich, dass in den Figuren nur eine besonders bevorzugte Ausführungsform der Erfindung dargestellt ist. Daneben ist jede andere Ausführungsform, insbesondere durch Vorsehen anderer Schwellwerte, durch eine Veränderung der Schaltung oder durch eine andere Anordnung oder Anzahl der Bauteile denkbar, ohne den Rahmen dieser Erfindung zu verlassen.

### Bezugszeichen

- 100: Mittelfrequenz-Schweißanordnung
- 110: Primärkreis
- 120: Sekundärkreis
- 130: Transformator
- 131: Transformatorkern
- 132: Primärwicklung
- 133: Sekundärwicklung
- 140: Ausgangsbereich
- 200: Vorrichtung
- 201: Gleichspannungsquelle
- 202: Mikroprozessor
- 300: Diagramm
- 301: y-Achse
- 302: y-Achse
- 303: y-Achse
- 304: x-Achse
- 400: Diagramm
- B: magnetische Flussdichte
- Bm: oberer Flussdichteschwellwert
- -Bm: unterer Flussdichteschwellwert
- D: Diode
- i_{br}: Lastrom
- i_{br-zg}: oberer Laststromschwellwert
- i_{br-sp}: unterer Laststromschwellwert
- L: Spule
- N: Windungszahl
- R: Widerstand
- S₁ - S₄: Transistoren
- u: Spannung an der Primärwicklung

## Patentansprüche

1. Verfahren zum Betreiben eines Transformators (130) mit einem Transformatorkern (131) mit einer Primärwicklung (132) und einer Sekundärwicklung (133), die in einen Sekundärkreis (120) geschaltet ist, umfassend die folgenden Schritte:
Regeln einer magnetischen Flussdichte (B) im Transformatorkern (131) zwischen einem oberen Flussdichteschwellwert (Bm) und einem unteren Flussdichteschwellwert (-Bm) ,
Regeln eines Laststroms (i_{br}) in dem Sekundärkreis (120) zwischen einem oberen Laststromschwellwert (i_{br-zg}) und einem unteren Laststromschwellwert (i_{br-sp}).

2. Verfahren nach Anspruch 1, **dadurch gekennzeichnet, dass** das Regeln der magnetischen Flussdichte (B) im Transformatorkern (131) zwischen dem oberen Flussdichteschwellwert (Bm) und dem unteren Flussdichteschwellwert (-Bm) durch abwechselndes Anlegen einer ersten Spannung (U_{DC} und einer zweiten Spannung (-U_{DC}) an die Primärwicklung (132) des Transformators (130) erfolgt.

3. Verfahren nach Anspruch 1 oder 2, **dadurch gekennzeichnet, dass** das Regeln des Laststroms (i_{br}) im Sekundärkreis (120) zwischen dem oberen Laststromschwellwert (i_{br-zg}) und dem unteren Laststromschwellwert (i_{br-sp}) durch abwechselndes Anlegen einer dritten Spannung (0V) und einer vierten Spannung (U_{DC}, -U_{DC}) an die Primärwicklung (132) des Transformators (130) erfolgt.

4. Verfahren nach Anspruch 2 und 3, **dadurch gekennzeichnet, dass** die erste (U_{DC}) und die zweite (-U_{DC}) Spannung Gleichspannungen mit im Wesentlichen gleichem Betrag und umgekehrter Polarität sind, die dritte Spannung (0V) im wesentlich Null ist und die vierte Spannung (U_{DC}, -U_{DC}) die erste (U_{DC}) oder die zweite (-U_{DC}) Spannung ist.

5. Vorrichtung zum Betreiben eines einen Transformatorkern (131) mit einer Primärwicklung (132) und einer Sekundärwicklung (133), die in einen Sekundärkreis (120) geschaltet ist, aufweisenden Transformators (130) mit:
einer ersten Bestimmungseinrichtung für eine magnetische Flussdichte (B) im Transformatorkern (131),
einer zweiten Bestimmungseinrichtung für einen Laststrom (i_{br}) im Sekundärkreis (120),
einer ersten Vergleichseinrichtung (202) zum Vergleichen der bestimmten magnetischen Flussdichte (B) mit wenigstens einem Flussdichteschwellwert (Bm, -Bm),
einer zweiten Vergleichseinrichtung (202) zum Vergleichen des bestimmten Laststroms (i_{br}) mit wenigstens einem Laststromschwellwert (i_{br-zg}, i_{br-sp}) und
einer Steuereinrichtung (202) zum Ansteuern auf Grundlage der Vergleiche von Schaltmitteln (S₁-S₄), die erste Anschlüsse für eine Spannungsquelle (u) und zweite Anschlüsse für die Primärwicklung (132) des Transformators (130) zum Anlegen einer ersten (U_{DC}), zweiten (-U_{DC}), dritten (0V) oder vierten Spannung (U_{DC} -U_{DC}) an die Primärwicklung (132) des Transformators (130) aufweisen.

6. Vorrichtung nach Anspruch 5, **dadurch gekennzeichnet, dass** sie die Schaltmittel (S₁-S₄) und/oder die Spannungsquelle (u) umfasst.

7. Vorrichtung nach Anspruch 5 oder 6, **dadurch gekennzeichnet, dass** die erste (U_{DC}) und die zweite (-U_{DC}) Spannung Gleichspannungen mit im Wesentlichen gleichem Betrag und umgekehrter Polarität sind, die dritte Spannung (0V) im wesentlich Null ist und die vierte Spannung (U_{DC}, -U_{DC}) die erste (U_{DC}) oder die zweite (-U_{DC}) Spannung ist.

8. Vorrichtung nach Anspruch 7, **gekennzeichnet durch** eine Gleichspannungsquelle zum Bereitstellen der ersten Gleichspannung (U_{DC}), die mit den Schaltmitteln (S₁-S₄) verbunden ist, wobei die Schaltmittel (S₁-S₄) zum Anlegen der ersten (U_{DC}), der zweiten (-U_{DC}) oder der dritten (0V) Spannung an die Primärwicklung ausgebildet sind.

9. Computerprogramm mit Programmcodemitteln, um die Schritte eines Verfahrens gemäß einem der Ansprüche 1 bis 4 durchzuführen, wenn das Computerprogramm auf einem Computer ausgeführt wird.

10. Computerprogrammprodukt mit Programmcodemitteln, die auf einem computerlesbaren Datenträger gespeichert sind, um die Schritte eines Verfahrens nach einem der Ansprüche 1 bis 4 durchzuführen, wenn das Computerprogrammprodukt auf einem Computer ausgeführt wird.

## Claims

1. Method for operating a transformer (130) having a transformer core (131) with a primary winding (132) and a secondary winding (133), which is connected in a secondary circuit (120), comprising the following steps:
regulation of a magnetic flux density (B) in the transformer core (131) between an upper flux density threshold value (Bm) and a lower flux density threshold value (-Bm),
regulation of a load current (i_{br}) in the secondary circuit (120) between an upper load current threshold value (i_{br-zg}) and a lower load current threshold value (i_{br-sp}).

2. Method according to Claim 1, **characterized in that** the regulation of the magnetic flux density (B) in the transformer core (131) between the upper flux density threshold value (Bm) and the lower flux density threshold value (-Bm) is performed by alternately applying a first voltage (U_{DC}) and a second voltage (-U_{DC}) to the primary winding (132) of the transformer (130).

3. Method according to Claim 1 or 2, **characterized in that** the regulation of the load current (i_{br}) in the secondary circuit (120) between the upper load current threshold value (i_{br-zg}) and the lower load current threshold value (i_{br-sp}) is performed by alternately applying a third voltage (0V) and a fourth voltage (U_{DC}, -U_{DC}) to the primary winding (132) of the transformer (130).

4. Method according to Claims 2 and 3, **characterized in that** the first voltage (U_{DC}) and the second voltage (-U_{DC}) are DC voltages with substantially the same magnitude and inverse polarity, the third voltage (0V) is substantially zero, and the fourth voltage (U_{DC}, -U_{DC}) is the first voltage (U_{DC}) or the second voltage (-U_{DC}).

5. Apparatus for operating a transformer (130) having a transformer core (131) with a primary winding (132) and a secondary winding (133), which is connected in a secondary circuit (120), having:
a first determination device for a magnetic flux density (B) in the transformer core (131),
a second determination device for a load current (i_{br}) in the secondary circuit (120),
a first comparison device (202) for comparing the determined magnetic flux density (B) with at least one flux density threshold value (Bm, -Bm),
a second comparison device (202) for comparing the determined load current (i_{br}) with at least one load current threshold value (i_{br-zg}, i_{br-sp}), and
a control device (202) for actuating, on the basis of the comparisons, switching means (S₁-S₄) which have first connections for a voltage source (u) and second connections for the primary winding (132) of the transformer (130) for the purpose of applying a first voltage (U_{DC}), a second voltage (-U_{DC}), a third voltage (0V) or a fourth voltage (U_{DC}, -U_{DC}) to the primary winding (132) of the transformer (130).

6. Apparatus according to Claim 5, **characterized in that** it comprises the switching means (S₁-S₄) and/or the voltage source (u).

7. Apparatus according to Claim 5 or 6, **characterized in that** the first voltage (U_{DC}) and the second voltage (-U_{DC}) are DC voltages with substantially the same magnitude and inverse polarity, the third voltage (0V) is substantially zero, and the fourth voltage (U_{DC}, -U_{DC}) is the first voltage (U_{DC}) or the second voltage (-U_{DC}).

8. Apparatus according to Claim 7, **characterized by** a DC voltage source for providing the first DC voltage (U_{DC}), which DC voltage source is connected to the switching means (S₁-S₄), with the switching means (S₁-S₄) being designed to apply the first voltage (U_{DC}), the second voltage (-U_{DC}) or the third voltage (0V) to the primary winding.

9. Computer program having program code means for carrying out the steps of a method according to one of Claims 1 to 4 when the computer program is run on a computer.

10. Computer program product having program code means, which are stored in a computer-readable data storage medium, for carrying out the steps of a method according to one of Claims 1 to 4 when the computer program product is run on a computer.

## Revendications

1. Procédé de conduite d'un transformateur (130) qui présente un noyau de transformateur (131) doté d'un enroulement primaire (132) et d'un enroulement secondaire (133) raccordé à un circuit secondaire (120), le procédé comportant les étapes qui consistent à:
réguler une densité de flux magnétique (B) dans le noyau de transformateur (131) entre une valeur de seuil supérieur (Bm) de la densité de flux et une valeur de seuil inférieur (-Bm) de densité de flux et
réguler un courant de charge (i_{br}) qui s'écoule dans le circuit secondaire (120) entre une valeur de seuil supérieur (i_{br-zg}) de courant de charge et une valeur de seuil inférieur (i_{br-sp}) de courant de charge.

2. Procédé selon la revendication 1, **caractérisé en ce que** la régulation de la densité de flux magnétique (B) dans le noyau (131) du transformateur entre la valeur de seuil supérieur (Bm) de densité de flux et la valeur de seuil inférieur (-Bm) de densité de flux s'effectue en appliquant en alternance une première tension (U_{DC}) et une deuxième tension (-U_{DC}) sur l'enroulement primaire (132) du transformateur (130).

3. Procédé selon la revendication 1 ou 2, **caractérisé en ce que** la régulation du courant de charge (i_{br}) qui s'écoule dans le circuit secondaire (120) entre la valeur de seuil supérieur (i_{br-zg}) du courant de charge et la valeur de seuil inférieur (i_{br-sp}) du courant de charge s'effectue en appliquant en alternance une troisième tension (0V) et une quatrième tension (U_{DC}, -U_{DC}) sur l'enroulement primaire (132) du transformateur (130).

4. Procédé selon les revendications 2 et 3, **caractérisé en ce que** la première tension (U_{DC}) et la deuxième tension (-U_{DC}) sont des tensions continues qui présentent essentiellement le même niveau et sont de polarités opposées, la troisième tension (0V) étant essentiellement nulle et la quatrième tension (U_{DC}, -U_{DC}) étant la première tension (U_{DC}) ou la deuxième tension (-U_{DC}).

5. Dispositif de conduite d'un transformateur (130) qui présente un noyau de transformateur (131) doté d'un enroulement primaire (132) et d'un enroulement secondaire (133) raccordé à un circuit secondaire (120), le dispositif présentant:
un premier dispositif de détermination de la densité de flux magnétique (B) dans le noyau de transformateur (131),
un deuxième dispositif de détermination qui détermine le courant de charge (i_{br}) qui s'écoule dans le circuit secondaire (120),
un premier dispositif de comparaison (202) qui compare la densité de flux magnétique (B) déterminée à au moins une valeur de seuil de densité de flux (Bm, -Bm),
un deuxième dispositif de comparaison (202) qui compare le courant de charge (i_{br}) déterminé à au moins une valeur de seuil (i_{br-zg}, i_{br-sp}) du courant de charge et
un dispositif de commande (202) qui, sur la base des comparaisons, amène des moyens de commutation (S₁-S₄) présentant des premiers raccordements à une source de tension (u) et des deuxièmes raccordements à l'enroulement primaire (132) du transformateur (130) à appliquer une première tension (U_{DC}), une deuxième tension (-U_{DC}), une troisième tension (0V) ou une quatrième tension (U_{DC}, -U_{DC}) sur l'enroulement primaire (132) du transformateur (130).

6. Dispositif selon la revendication 5, **caractérisé en ce qu'**il comprend les moyens de commutation (S₁-S₄) et/ou la source de tension (u).

7. Dispositif selon la revendication 5 ou 6, **caractérisé en ce que** la première tension (U_{DC}) et la deuxième (-U_{DC}) sont des tensions continues qui présentent essentiellement le même niveau et sont de polarités opposées, la troisième tension (0V) étant essentiellement nulle et la quatrième tension (U_{DC}, -U_{DC}) est la première tension (U_{DC}) ou la deuxième tension (-U_{DC}).

8. Dispositif selon la revendication 7, **caractérisé par** une source de tension continue qui délivre la première tension continue (U_{DC}) et qui est reliée aux moyens de commutation (S₁-S₄), les moyens de commutation (S₁-S₄) étant configurés pour appliquer la première tension (U_{DC}), la deuxième tension (-U_{DC}) ou la troisième tension (0V) sur l'enroulement primaire.

9. Programme informatique doté de moyens de code de programme qui permettent d'exécuter les étapes d'un procédé selon l'une des revendications 1 à 4 lorsque le programme informatique est exécuté sur un ordinateur.

10. Produit de programme informatique doté de moyens de code de programme qui sont conservés sur un support de données lisibles par ordinateur et qui exécutent les étapes d'un procédé selon l'une des revendications 1 à 4 lorsque le produit de programme informatique est exécuté sur un ordinateur.
